# EUROPEAN PATENT SPECIFICATION

(11) **EP 3 439 254 B1**
(45) Date of publication and mention of the grant of the patent: **06.10.2021**
(21) Application number: 17306025.2
(22) Date of filing: 01.08.2017
(51) Int. Cl.: H04L 12/933, G05B 19/042

(54) **A MULTIPORT DEVICE**
MEHRFACHANSCHLUSSVORRICHTUNG
DISPOSITIF MULTIPORT

(43) Date of publication of application: 06.02.2019
(73) Proprietor: Schneider Electric Industries SAS, 92500 Rueil-Malmaison (FR)
(72) Inventor: Stefan, Iulia D., 97828 Marktheidenfeld (DE); Winkelhöfer, Klaus, 74706 Osterburken (DE)
(74) Representative: Manitz Finsterwald Patent- und Rechtsanwaltspartnerschaft mbB

(56) References cited:
- WO-A1-2016/172514
- US-A1- 2006 109 866
- US-A1- 2007 280 285
- US-A1- 2015 154 136
- US-A1- 2016 292 004
- Siemens: "PROFINET System Description", , 31 March 2012 (2012-03-31), XP055442928, Retrieved from the Internet: URL:http://www.siemens.fi/pool/products/in dustry/iadt_is/tuotteet/automaatiotekniikk a/teollinen_tiedonsiirto/profinet/man_pnsy stem_description.pdf [retrieved on 2018-01-22]
- HODO ELIKE ET AL: "Threat analysis of IoT networks using artificial neural network intrusion detection system", 2016 INTERNATIONAL SYMPOSIUM ON NETWORKS, COMPUTERS AND COMMUNICATIONS (ISNCC), IEEE, 11 May 2016 (2016-05-11), pages 1-6, XP033005222, DOI: 10.1109/ISNCC.2016.7746067 [retrieved on 2016-11-16]

## Description

The present invention relates to a multiport device adapted to be connected to a plurality of field devices, particularly using industrial Ethernet connections.

Field devices are used in a variety of industrial processes. These industrial processes become more and more automated which leads to an increasingly complex and demanding automation environment.

The increasing demands on automation lead to increasing demands on the field devices. Particularly, the field devices have to be energy efficient and low cost devices which at the same time are cyber secure, have Internet access for remote diagnosis and monitoring and comprise a high performance. Furthermore, it is required that field devices become more and more compact and easier to use.

These requirements on automation processes lead to expensive development and validation cycles. Also a complex programming of industrial machines and their field devices may be required. The high requirements in turn require highly qualified personnel and at the same time may raise compatibility issues between devices of different manufacturers.

Document US 2015/154136 A1 describes an input/output (I/O) module for an industrial control system that is directly embedded within a communications backplane of a central control unit of the control system. The input/output module enables communication between field devices connected to communication ports of the input/output module and the central control unit connected to the common communications backplane of the control system.

Document WO 2016/172514 A1 describes an industrial control system with a central controller that is configured as a programmable logic controller (PLC) and implements a security system that validates and verifies the data received by the central controller from the field devices, such as from sensors connected to the PLC.

Document "PROFINET System Description" by Siemens AG describes the PROFINET communication system that allows for real-time communication by prioritising messages containing automation data from field devices over the remaining network traffic and/or a reserving a predefined bandwidth for the transmission of said messages.

Document HODO ELIKE ET AL: "Threat analysis of loT networks using artificial neural network Intrusion detection System", 2016 INTERNATIONAL SYMPOSIUM ON NETWORKS, COMPUTERS AND COMMUNICATIONS (ISNCC), IEEE, 11 May 2016, pages 1-6 describes an intrusion detection system for an internet of things (IoT) network.

Document US 2007/280285 A1 describes communication between field devices that are coupled to a process controller and an upstream device, such as a data acquisition system or an asset management system.

Document US 2016/292004 A1 describes an industrial control system having a central controller that is connected to different field devices via a field network.

Document US 2006/109866 A1 describes a data transmission technique for realising real-time communication via an Ethernet network.

It is the object of the present invention to provide means that allow highly complex and demanding automation of industrial processes with reduced cost and effort. This object is solved by a multiport device having the features of claim 1.

Particularly, this object is satisfied by a multiport device adapted to be connected to a plurality of field devices, particularly using industrial Ethernet connections, wherein the multiport device comprises:
- a plurality of communication ports for the connection of field devices and for data communication between the multiport device and the field devices,
- a matrix switcher configured to enable data communication between said communication ports and/or between said field devices,
- a control unit configured to generate a plurality of communication rules and to control said matrix switcher based on at least said plurality of communication rules in order to affect data communication between said communication ports and/or between said field devices, wherein the control unit is configured to group one or more of the communication rules into one or more function modules and wherein one or more function modules are assigned to at least one of the communication ports, wherein the control unit is configured to use a neural network that is adapted to survey data telegram communication of at least some of the communication ports to learn pattern of the data telegram communication within the matrix switcher and/or within the multiport device, wherein the neural network is adapted to update communication rules of at least one of the function modules to reflect the information learned by the neural network, wherein the communication rules of the at least one of the function modules are adapted to optimize the data telegram communication between the communication ports and/or between the field devices by reserving timeslots for expected and/or cyclic data telegrams at a respective communication port.

In other words, the multiport device of the invention is adapted to assign function modules to specific communication ports wherein these function modules then add additional functionality to the specific communication port and thereby add additional functionality to the field device connected to the specific communication port. Particularly, each communication port (and thus each connected field device) can be configured and/or controlled independently. This leads to an increased functionality of the field device, wherein the additional functionality is provided by the multiport device. Therefore, the field device itself does not have to provide for the additional functionality and can hence comprise cheaper components and can be developed with less effort.

In the following further details of the multiport device of the invention are described.

The communication rules may be based on/adapted to the field devices connected to the multiport device. This means that for different connected field devices different communication rules may be generated. The communication rules are at least in part generated by the multiport device itself, e.g. by the control unit.

For example, the communication rules may allow communication of the multiport device with different field devices using different protocols (e.g. different field bus protocols) and allow assigning functions (i.e. function modules) to a specific communication port, as laid out above. Furthermore, it is possible to assign a function module for traffic optimization to one of the communication ports. Thereby, the communication rules of this function module may provide for an optimized data flow for the specific communication port. For the sake of clarity, it is pointed out that several function modules can be assigned to one single communication port, simultaneously.

In general, function modules can be adapted to provide any conceivable additional functionality. Particularly, the function modules may allow to configure, to control, to monitor and/or to secure the field devices connected to the multiport device.

Apart from the mentioned field devices, also further devices such as gateways, engineering tools (e.g. on a standard PC), the Internet and/or Cloud servers may be connected to the multiport device, preferably using the communication ports. For example, the engineering tools may be used to program and/or configure field devices that are connected to the multiport device.

As used herein, "communication" means a digital transfer of data, e.g. using data packets (i.e. data telegrams), particularly within an industrial Ethernet connection.

A function module can comprise several communication rules, wherein the communication rules affect and/or alter data communication of the multiport device. Thereby, data communication between the communication ports and/or between the field devices may be affected and/or altered. For example, a function module may comprise communication rules which alter data communication such that communication with a field device using e.g. a field bus protocol is possible.

The function modules may only affect and/or alter the communication performed by the communication port they are assigned to. The multiport device can handle different communication ports and/or field devices separately from each other.

The communication rules may be provided by a rule handler which can be part of the control unit.

The matrix switcher may be configured to selectively allow data communication between different communication ports. Particularly, the matrix switcher can be programmed to establish data connections between specific communication ports. The function modules and/or the communication rules may determine which communication ports are allowed to communicate with each other. The matrix switcher preferably comprises a separate data connection with each of the communication ports. The matrix switcher may selectively interconnect the communication ports and/or be adapted to selectively route data communication from one communication port to one or more other communication ports.

The field devices that may be connected to the multiport device may comprise sensors, actors, control devices (e.g. programmable logic controllers - PLCs) and the like.

Due to the possibility of adding functionality to the field devices, wherein the added functionality is hosted on the multiport device, lower costs for the field devices are achievable. Furthermore, function modules can be provided that allow a backwards compatibility of the field devices or a faster communication with the field devices. Thereby, higher automation requirements can be fulfilled and/or the life cycle even of outdated devices can be prolonged.

Preferably, the communication rules and/or the function modules are stored within a database of the control unit. The communication rules and/or the function modules can be enforced by a rule handler within the control unit.

Advantageously, the control unit is adapted to update the function modules and/or the communication rules during operation of the multiport device. Thereby, hot-plugging of field devices on the communication ports is possible. For example, if a field device is connected to a communication port, a configuration at run-time is provided for the new field device and/or the respective communication port.

At least one of the function modules is adapted to optimize data communication between the communication ports and/or between the field devices. Traffic optimization can be performed for at least one communication port. Alternatively, traffic optimization can be collectively performed for more than one of the communication ports, wherein e.g. traffic between the more than one communication ports is optimized.

The traffic optimization can be based on pattern recognition, wherein particularly the used communication port, the sent time of data, the length and/or volume of the transmitted data and/or the kind of transmitted data is considered.

The control unit is adapted to use machine learning techniques to optimize data communication, particularly using a feed-forward multi-layer neural network. In other words, traffic optimization is based on machine learning and/or neural networks. Particularly, an unsupervised learning process can be utilized.

For the learning process, the neural network can be supplied with information about data communication through the multiport device. Particularly, an incoming and/or a destination communication port, a telegram type, a time stamp and/or a data length of the data communication can be inputted into the neural network. The neural network can then output information about the expected usage of specific communication ports, an expected cycle time of data communications, an expected jitter of data communications and/or an expected priority of data communications. From the output of the neural network, a re-routing of communication paths, e.g. in case of communication loss, suboptimal timing, etc., can be performed.

Advantageously, the parallel processing in such neural networks is fast and also allows a fast learning which in turn leads to a fast response to new conditions, e.g. if new devices are connected to the multiport device of the invention.

Alternatively or additionally, a support vector machine (SVM) can be used as a machine learning technique. In contrast to the above-mentioned machine learning technique, a SVM uses a supervised learning process.

The function module adapted to optimize data communication is configured to reserve time slots at a respective communication port for expected and/or cyclic data telegrams. For example, the control unit can learn (e.g. using the neural network) when a cyclic telegram is expected. The matrix switcher can then be operated such by the control unit (and/or by a function module) that the destination port of the cyclic telegram is held clear of data traffic for the expected time-period. In this connection, the neural network updates the communication rules of a function module to reflect the information learned by the neural network. For learning pattern of data communication within the matrix switcher and/or within the multiport device, the neural network surveys the data communication of at least some of the communication ports.

It is preferred that the function module adapted to optimize data communication is configured to prioritize incoming data communication, preferably according to the communication protocol used, and to transmit the respective data communication in accordance with its priority using the matrix switcher. Particularly, cut-through telegrams may have the highest priority and may be transmitted from a receiving communication port to a destination communication port immediately using the matrix switcher. The second highest priority may be given to industrial Ethernet connections (i.e. real-time Ethernet and/or field bus connections). The third highest priority may be assigned to standard Ethernet data communication. Data communication of standard Ethernet therefore has to wait until all waiting data communication of industrial Ethernet connections has been transmitted by the matrix switcher. Correspondingly, industrial Ethernet connections have to wait until all cut-through telegrams have been transmitted by the matrix switcher.

Particularly, the control unit may use a sorting algorithm which first detects if a telegram is a cut-through telegram. If that is the case, the telegram is immediately forwarded to the destination communication port. If a telegram is not a cut-through telegram, it is next determined if the telegram is a part of an industrial and/or real-time Ethernet communication. If that is the case, the telegram is queued in a queue for the second highest priority. Instead, if the telegram is not part of an industrial and/or real-time Ethernet connection, it is queued in a lower level queue (third highest priority queue).

Preferably, all telegrams or at least the cut-through telegrams are sent to a data optimizer within the control unit. The data optimizer may comprise the above-mentioned neural network and allows optimizing data communication within the matrix switcher.

A cut-through telegram is a telegram that is forwarded to the configured port without any prior analysis. An example for cut-through telegrams are Sercos telegrams. After the telegram is sent/forwarded, a copy of it is forwarded to the data optimizer for analysis and creation of rules for the specific ports (for example: time slot reservation).

It is further preferred if the matrix switcher and/or the control unit are adapted to forward data telegrams in OSI layer 1 or 2 immediately and/or to save data telegrams in OSI layer 3 in prioritized queues. Data telegrams in OSI layer 1 or 2 can be cut-through telegrams and are thus forwarded immediately. Data telegrams in OSI layer 3 may be telegrams of industrial Ethernet or standard Ethernet connections. It has to be understood that for all telegrams further services may be executed, if they are configured for the respective communication port (i.e. if the corresponding function module exists and is assigned to the corresponding communication port).

At least one of the function modules is adapted to provide additional functionality selectively to at least one of the field devices, preferably when a field device is connected to the multiport device, wherein the additional functionality is provided by the multiport device.

In other words, the additional functionality is coupled/linked to a specific communication port and thereby may be coupled/linked to a specific field device. When viewed from an external point of view, the additional functionality then seems to be provided by the field device but is actually provided by the multiport device. As laid out above, the field device can thus be cheaper, less complex and can be developed faster as the additional functionality is not needed to be provided by the field device itself.

For example, the additional functionality comprises at least one of the following:
- cyber security functionality, preferably a firewall and/or a login server;
- webserver functionality;
- VPN (Virtual Private Network) functionality; and
- intruder detection.

For example, a servo drive may be connected to a communication port of the multiport device, wherein a function module that provides firewall functionality to the communication port to which the servo drive is connected can be activated. If a data connection to the servo drive is established from outside the multiport device (using a further communication port of the multiport device), this data connection reaches through the multiport device up to the servo drive. Due to the activated function module the data connection to the servo drive is led through a firewall, i.e. strict rules which data packets or data telegrams may be forwarded to the servo drive are applied.

As another example, webserver functionality may be activated for the servo drive. If the servo drive is then contacted via a data connection, a website may be displayed, wherein the website may appear to be provided by the servo drive (however in reality it is provided by the multiport device). A user can then use the website to configure the servo drive.

Function modules can be assigned individually and separately to the communication ports. It is therefore possible that different firewalls and/or different webservers can be activated for different communication ports.

As the above-mentioned additional functionality is provided by the multiport device, the servo drive is not required to have a powerful processor in order to perform the functionality of a firewall and/or a webserver itself.

In order to gather information about the field devices connected to the multiport device, the control unit can be configured to (periodically) scan the field devices connected to the communication ports of the multiport device and/or to read configuration tables (i.e. configuration files) of the field devices. During the scan of the field devices, the multiport device may read information about the MAC-address, the supported functionality, the name and/or the hardware and/or software identification from each field device. From the information gathered about the field devices, e.g. the webserver functionality may be adapted to the specific connected field device, particularly based on the configuration table.

It is preferred if at least one of the function modules is adapted to provide a redundant data communication by assigning two or more communication ports to the same field device and/or by sending the same information to two or more communication ports. All of the two or more communication ports may be physically connected with the same field device. Thereby, an increased availability of the field device is assured. For example, communication data can be transmitted to the field device using either one of the communication ports. It is also possible to create a fault tolerance function module that provides rules for dealing with the failure or disconnection of a field device. Particularly, the communication rules can be such that the remaining functionality of the field devices connected to the multiport device remains intact and/or untouched. For this purpose, the communication rules can initiate a preprogrammed re-routing of data communication. For example, more than one field device can be used by the communication rules to ensure fault tolerance. If one field device fails and/or is disconnected from the multiport device, the other field device(s) take over the functionality of the failing field device.

Preferably, the matrix switcher and/or the control unit are adapted to translate different communication protocols such that data communication between field devices using different communication protocols is enabled. Thus, the multiport device may provide gateway functionality. The gateway functionality may be comprised in one function module that is activated by the control unit and is assigned to one or more communication ports. Particularly, this function module may translate one Ethernet-based protocol into another. Thereby, field devices connected to the multiport device may use different Ethernet and/or field bus protocols and can nonetheless communicate seamlessly.

Further preferably, the matrix switcher and/or the communication port are adapted to support real-time Ethernet connections and standard Ethernet connections, wherein at least the real-time Ethernet connections are based on different communication protocols. Also, the standard Ethernet connections may be based on different communication protocols. Real-time Ethernet is equivalent to industrial Ethernet. The different protocols based on real-time Ethernet connections may comprise field bus protocols, particularly the field bus protocols Sercos III, Ether-CAT, Profinet and the like. In order to support the real-time Ethernet connections, the control unit may comprise a real-time clock (RTC). Apart from the Ethernet-based protocols, the multiport device may also support non-Ethernet-based protocols such as Sercos I and II and/or Profibus. For this purpose, the multiport device may comprise non-Ethernet communication ports and/or communication ports that support both Ethernet-based and non-Ethernet-based data communication. The multiport device can also be adapted to translate Ethernet-based data communication into non-Ethernet-based data communication and vice versa.

Advantageously, the matrix switcher and/or the communication ports are adapted to scan the communication ports for connected field devices and to generate the communication rules based on the detected field devices. During the scan of the field devices, configuration files of the field devices can be transferred to the multiport device (i.e. downloaded from the field devices). Communication rules can then be generated based on the information contained in the configuration files. In addition to this automatic configuration of the multiport device, the multiport device can also be configured manually, i.e. communication rules and/or function modules can be provided manually. For this purpose, the multiport device can be accessed via a webserver within the multiport device, which displays a website that allows the configuration of the multiport device using a graphical user interface (GUI).

The scan of field devices connected to the multiport device can be performed periodically, in order to detect hot-plugged new field devices and/or removed field devices.

The matrix switcher can - apart from the communication ports - also comprise input and/or output ports. These input and/or output ports can be adapted for analogue and/or digital data. For example, a temperature sensor can be connected to an input port. A status light which indicates the operating condition of the multiport device may be connected to one of the output ports.

The input and/or output ports can be used to provide functionality for all (or a limited selection) of field devices connected to the multiport device. For example, one of the input ports can be connected to an emergency stop. When the emergency stop is activated, the multiport device can then stop all (or a limited selection) of the field devices connected to the multiport device. Correspondingly, an output port may be used to distribute an "enable operation" signal to all (or a limited selection) of the field devices connected to the multiport device.

The multiport device can comprise a human machine interface (HMI). The HMI can be formed by a display that is attached to a housing of the multiport device.

The HMI may be adapted to allow configuring the multiport device and/or to display status information about the multiport device.

It is preferred if the multiport device comprises a multi-core system-on-chip (SOC) having at least one CPU (Central Processing Unit) and at least one FPGA (Field Programmable Gate Array), wherein the CPU is adapted to provide the functionality of the control unit and/or the FPGA is adapted to provide the functionality of the matrix switcher. Preferably, the CPU may have one computational core for each communication port or for a group of several communication ports. Thereby, a high speed of processing data in connection with each communication port can be provided.

The CPU may be running a firmware for executing the different function modules assigned to the communication ports. The firmware may also execute an operating system of the multiport device and/or the functionality of the control unit.

The use of an FPGA for the matrix switcher is especially advantageous as the communication rules assigned to each communication port can be mapped in the programing of the FPGA. The FPGA also allows to independently control the different communication ports.

The invention further relates to a method of operating a multiport device as defined in claim 13.

Two multiport devices may be connected to each other using a data connection. Preferably, the connection of the two multiport devices is based on a master-slave-principle (i.e. a producer-consumer-principle) and uses a fast communication backplane. It is also possible to connect more than two multiport devices wherein one of the multiport devices is configured as a master and the remaining multiport devices are configured as a slave. The master multiport device may supervise the operation of the slave multiport devices. Particularly, the master multiport device may not only process the local (i.e. its) communication ports but also the communication ports of the further multiport devices. The communication ports of the further multiport devices may then be regarded as virtual ports by the master multiport device.

When two or more multiport devices are connected, the multiport devices may merge their activated function modules and their information about connected field devices. The merged information is preferably transferred to the master multiport device.

Furthermore, the invention also relates to a system comprising at least one multiport device (as described above) and at least one field device connected to one of the communication ports of the multiport device using an industrial Ethernet connection.

An industrial machine may comprise multiple field devices (e.g. sensors and/or actors and/or control devices, e.g. PLCs), wherein the field devices are connected to a multiport device using industrial Ethernet connections. The multiport device may be part of the industrial machine.

The advantages, preferable features and/or embodiments of the inventive multiport device described in the foregoing also apply to the inventive method and to the inventive system.

The invention will be explained in the following in detail by means of exemplary embodiments and with reference to the Figures:
- Fig. 1: shows a multiport device connected to several field devices; and
- Fig. 2: shows a system of two multiport devices.

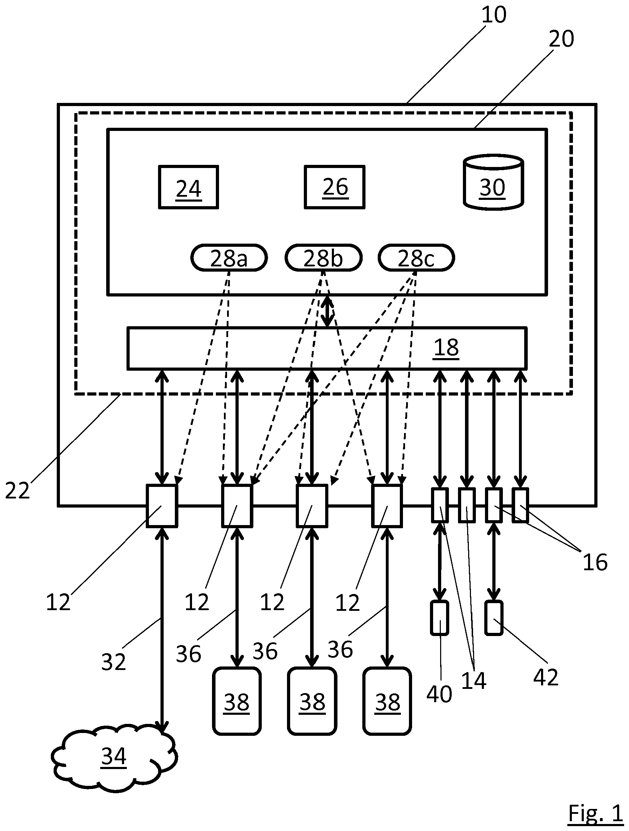

Fig. 1 shows a multiport device 10. The multiport device 10 comprises several Ethernet communication ports 12. Furthermore, the multiport device 10 comprises inputs 14 and outputs 16.

The Ethernet communication ports 12, the inputs 14 and the outputs 16 are each separately connected to a matrix switcher 18, which is part of the multiport device 10. The matrix switcher 18 allows data connections between the Ethernet communication ports 12, the inputs 14 and the outputs 16.

The matrix switcher 18 is connected to a control unit 20. The control unit 20 controls operation of the matrix switcher 18. Furthermore, the control unit 20 is part of the multiport device 10 and has a data connection to the matrix switcher 18.

The control unit 20 and the matrix switcher 18 are formed by a single system on chip 22 (SOC). The matrix switcher 18 is formed by an FPGA and the control unit 20 is formed by a CPU of the SOC 22.

The control unit 20 comprises a managing unit 24 which collects information, detects trends and optimizes dataflow through the matrix switcher 18.

The control unit 20 furthermore comprises a rule handler 26 and a multitude of function modules 28 (28a, 28b, 28c). The control unit 20 furthermore comprises a database 30.

One of the Ethernet communication ports 12 of the multiport device 10 is connected via a standard Ethernet connection 32 to the Internet 34. The other Ethernet communication ports 12 are connected to several field devices 38 (three are depicted in Fig. 1) via industrial Ethernet connections 36.

One input 14 is connected to a temperature sensor 40, whereas one output 12 is connected to a status light 42.

During operation of the multiport device 10 different function modules 28 can be assigned (indicated by arrows) to the different Ethernet communication ports 12.

In the example of Fig. 1, a function module 28a for webserver functionality may be assigned to the Ethernet communication port 12 that is connected to the Internet 34. Thus, if a user tries to connect to the multiport device 10 via the Internet 34, a website can be displayed e.g. on a browser of the user that allows the user to configure the multiport device 10 using the website.

The function module 28a having the webserver functionality may also be assigned to one of the Ethernet communication ports 12 to which one of the field devices 38 is connected. If a user then tries to connect with the respective field device 38, a different website will be displayed which will give the impression as if the field device 38 hosts the website. The website can then allow a user to configure the respective field device 38.

Furthermore, a function module 28b which provides firewall and/or VPN capability can be assigned to the Ethernet communication ports to which the field devices 38 are connected. In that case only data connections which are part of a virtual private network (VPN) and which additionally pass through the firewall are routed through to the respective field device 38.

Also, traffic optimization can be activated by activating a corresponding function module 28c and assigning it to the Ethernet communication ports 12. Thereby, for example, standard Ethernet traffic from the Internet 34 is delayed, if communications using industrial Ethernet communications 36 (i.e. real-time communications) are in progress.

Due to the assignment of the function modules 28 to the Ethernet communication ports 12 additional functionality seemingly is provided by the field devices 38. However, in reality, this functionality is actually provided by the multiport device 10. Thereby, the field devices 38 can comprise cheaper parts and are not required to provide a high level of functionality.

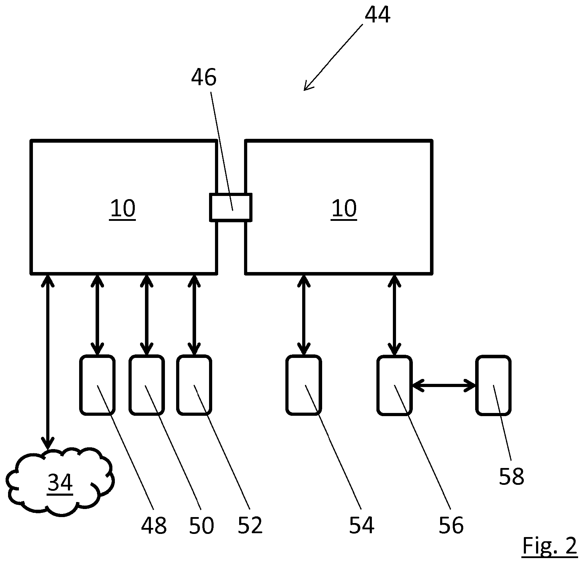

Fig. 2 shows a system 44 having two multiport devices 10 which are connected by a data connection in the form of a fast communication backplane 46.

One of the multiport devices 10 is connected to the Internet 34 and is also connected to a number of field devices. One field device is formed by a PLC 48. The PLC 48 controls a servo drive 50 that is also connected to the multiport device 10. The PLC 48 may control the servo drive 50 using the protocol EIP (Ethernet/IP). A further PLC 52 may also be connected to one of the multiport devices 10. The further PLC 52 controls a magnetic actor 54 that is connected to the other multiport device 10. The magnetic actor 54 is controlled via the field bus protocol Sercos III. A translation of the different protocols is performed by the multiport devices 10.

One of the multiport device 10 is connected to an external gateway 56 which in turn is connected to an I/O-(input/output-)device 58. The PLC 48 is able to communicate with the I/O device 58 via the external gateway 56 and via the two multiport devices 10, wherein within the multiport devices 10 data from the I/O device 58 is transmitted from the matrix switcher 18 to the fast communication backplane 48 and onto the next matrix switcher 18 and finally arrives at the PLC 48.

Due to the combination of several multiport devices 10 an easily scalable and flexible (i.e. field bus protocol independent) communication is possible between different field devices 38, 48, 50, 52, 54, 56, 58.

### List of reference signs

- 10: multiport device
- 12: Ethernet communication port
- 14: input
- 16: output
- 18: matrix switcher
- 20: control unit
- 22: SOC
- 24: managing unit
- 26: rule handler
- 28: function module
- 28a: webserver function module
- 28b: firewall and/or VPN function module
- 28c: traffic optimization function module
- 30: database
- 32: standard Ethernet connection
- 34: Internet
- 36: industrial Ethernet connection
- 38: field device
- 40: temperature sensor
- 42: status light
- 44: system
- 46: fast communication backplane
- 48: PLC
- 50: servo drive
- 52: further PLC
- 54: magnetic actor
- 56: external gateway
- 58: I/O-device

## Claims

1. A multiport device (10) adapted to be connected to a plurality of field devices (38, 48, 50, 52, 54, 56, 58), particularly using industrial Ethernet connections (36), wherein the multiport device (10) comprises:
- a plurality of communication ports (12) for the connection of field devices (38, 48, 50, 52, 54, 56, 58) and for data communication between the multiport device (10) and the field devices (38, 48, 50, 52, 54, 56, 58),
- a matrix switcher (18) configured to enable data communication between said communication ports (12) and/or between said field devices (38, 48, 50, 52, 54, 56, 58),
- a control unit (20) configured to generate a plurality of communication rules and to control said matrix switcher (18) based on at least said plurality of communication rules in order to affect data communication between said communication ports (12) and/or between said field devices (38, 48, 50, 52, 54, 56, 58),
wherein the control unit (20) is configured to group one or more of the communication rules into one or more function modules (28) and wherein one or more function modules (28) are assigned to at least one of the communication ports (12),
wherein the control unit (20) is configured to use a neural network that is adapted to survey data telegram communication of at least some of the communication ports (12) to learn pattern of the data telegram communication within the matrix switcher (18) and/or within the multiport device (10),
wherein the neural network is adapted to update communication rules of at least one of the function modules (28) to reflect the information learned by the neural network,
wherein the communication rules of the at least one of the function modules (28) are adapted to optimize the data telegram communication between the communication ports (12) and/or between the field devices (38, 48, 50, 52, 54, 56, 58) by reserving timeslots for expected and/or cyclic data telegrams at a respective communication port (12).

2. The multiport device (10) of claim 1, wherein the control unit (20) is adapted to update the function modules (28) and/or the communication rules during operation of the multiport device (10).

3. The multiport device (10) of at least one of the preceding claims, wherein the neural network is a feed-forward multi-layer neural network.

4. The multiport device (10) of at least one of the preceding claims, wherein the at least one of the function modules (28) adapted to optimize data communication is configured to prioritize incoming data communication, preferably according to the communication protocol used, and to transmit the respective data communication in accordance with its priority using the matrix switcher (18).

5. The multiport device (10) of claim 4, wherein
the matrix switcher (18) and/or the control unit (20) are adapted to forward data telegrams in OSI layer 1 or 2 immediately and/or to save data telegrams in OSI layer 3 in prioritized queues.

6. The multiport device (10) of at least one of the preceding claims, wherein at least one of the function modules (28) is adapted to provide additional functionality selectively to at least one of the field devices (38, 48, 50, 52, 54, 56, 58), preferably when the field device (38, 48, 50, 52, 54, 56, 58) is connected to the multiport device (10), wherein the additional functionality is provided by the multiport device (10).

7. The multiport device (10) of claim 6, wherein the additional functionality comprises at least one of the following:
- cybersecurity functionality, preferably a firewall and/or a login server,
- webserver functionality,
- VPN functionality and
- intruder detection.

8. The multiport device (10) of at least one of the preceding claims, wherein at least one of the function modules (28) is adapted to provide a redundant data communication by assigning two or more communication ports (12) to the same field device (38, 48, 50, 52, 54, 56, 58) and/or by sending the same information to two or more communication ports (12).

9. The multiport device (10) of at least one of the preceding claims, wherein the matrix switcher (18) and/or the control unit (20) are adapted to translate different communication protocols such that data communication between field devices (38, 48, 50, 52, 54, 56, 58) using different communication protocols is enabled.

10. The multiport device (10) of at least one of the preceding claims, wherein the matrix switcher (18) and/or the communication port are adapted to support real-time Ethernet connections and standard Ethernet connections, wherein at least the real-time Ethernet connections are based on different communication protocols.

11. The multiport device (10) of at least one of the preceding claims, wherein the matrix switcher (18) and/or the communication ports (12) are adapted to scan the communication ports (12) for connected field devices (38, 48, 50, 52, 54, 56, 58) and to generate the communication rules based on the detected field devices (38, 48, 50, 52, 54, 56, 58).

12. The multiport device (10) of at least one of the preceding claims, comprising a multi-core System-On-Chip (22) having at least one CPU and at least one FPGA, wherein the CPU is adapted to provide the functionality of the control unit (20) and the FPGA is adapted to provide the functionality of the matrix switcher (18).

13. A method of operating a multiport device (10), comprising:
- connecting a plurality of field devices (38, 48, 50, 52, 54, 56, 58) to communication ports (12) of the multiport device (10);
- generating a plurality of communication rules wherein one or more of the communication rules are grouped into one or more function modules (28) and wherein one or more function modules (28) are assigned to at least one of the communication ports (12),
- surveying data telegram communication of at least some of the communication ports (12) to learn pattern of data telegram communication within the matrix switcher (18) and/or the multiport device (10) using a neural network,
- updating communication rules of at least one of the function modules (28) to reflect the information learned by the neural network,
wherein the communication rules of the at least one of the function modules (28) optimize the data telegram communication between the communication ports (12) and/or between the field devices (38, 48, 50, 52, 54, 56, 58) by reserving timeslots for expected and/or cyclic data telegrams at a respective communication port (12),
- controlling a matrix switcher (18) based on at least said plurality of communication rules and/or said function modules (28) in order to affect data communication between said field devices (38, 48, 50, 52, 54, 56, 58).

14. A system comprising at least one multiport device (10) according to at least one of claims 1 to 12 and at least one field device (38, 48, 50, 52, 54, 56, 58) connected to one of the communication ports (12) of the multiport device (10) using an industrial Ethernet connection (36).

## Patentansprüche

1. Vorrichtung (10) mit mehreren Anschlüssen, die dazu geeignet ist, mit einer Vielzahl von Feldgeräten (38, 48, 50, 52, 54, 56, 58) verbunden zu werden, insbesondere unter Verwendung von industriellen Ethernet-Verbindungen (36), wobei die Vorrichtung (10) mit mehreren Anschlüssen umfasst:
- eine Vielzahl von Kommunikationsanschlüssen (12) für das Anschließen von Feldgeräten (38, 48, 50, 52, 54, 56, 58) und für die Datenkommunikation zwischen der Vorrichtung (10) mit mehreren Anschlüssen und den Feldgeräten (38, 48, 50, 52, 54, 56, 58),
- eine Matrixschaltanlage (18), die so konfiguriert ist, dass sie eine Datenkommunikation zwischen den Kommunikationsanschlüssen (12) und/oder zwischen den Feldgeräten (38, 48, 50, 52, 54, 56, 58) ermöglicht,
- eine Steuereinheit (20), die so konfiguriert ist, dass sie eine Vielzahl von Kommunikationsregeln erzeugt und die Matrixschaltanlage (18) auf der Grundlage von zumindest der Vielzahl von Kommunikationsregeln steuert, um eine Datenkommunikation zwischen den Kommunikationsanschlüssen (12) und/oder zwischen den Feldgeräten (38, 48, 50, 52, 54, 56, 58) zu beeinflussen,
wobei die Steuereinheit (20) so konfiguriert ist, dass sie eine oder mehrere der Kommunikationsregeln in ein oder mehrere Funktionsmodule (28) gruppiert, und wobei ein oder mehrere Funktionsmodule (28) mindestens einem der Kommunikationsanschlüsse (12) zugeordnet sind,
wobei die Steuereinheit (20) so konfiguriert ist, dass sie ein neuronales Netzwerk verwendet, das geeignet ist, um eine Datentelegramm-Kommunikation von zumindest einigen der Kommunikationsanschlüsse (12) zu überwachen, um Muster der Datentelegramm-Kommunikation innerhalb der Matrixschaltanlage (18) und/oder innerhalb der Vorrichtung (10) mit mehreren Anschlüssen zu erlernen,
wobei das neuronale Netzwerk geeignet ist, um Kommunikationsregeln von mindestens einem der Funktionsmodule (28) zu aktualisieren, um die von dem neuronalen Netzwerk erlernten Informationen abzubilden,
wobei die Kommunikationsregeln des mindestens einen der Funktionsmodule (28) geeignet sind, um die Datentelegramm-Kommunikation zwischen den Kommunikationsanschlüssen (12) und/oder zwischen den Feldgeräten (38, 48, 50, 52, 54, 56, 58) zu optimieren, indem Zeitfenster für erwartete und/oder zyklische Datentelegramme an einem jeweiligen Kommunikationsanschluss (12) reserviert werden.

2. Vorrichtung (10) mit mehreren Anschlüssen nach Anspruch 1, wobei die Steuereinheit (20) geeignet ist, um die Funktionsmodule (28) und/oder die Kommunikationsregeln während des Betriebs der Vorrichtung (10) mit mehreren Anschlüssen zu aktualisieren.

3. Vorrichtung (10) mit mehreren Anschlüssen nach mindestens einem der vorhergehenden Ansprüche, wobei
das neuronale Netzwerk ein mehrschichtiges neuronales Netzwerk mit Vorwärtskopplung ist.

4. Vorrichtung (10) mit mehreren Anschlüssen nach mindestens einem der vorhergehenden Ansprüche, wobei
das mindestens eine der Funktionsmodule (28), die zur Optimierung der Datenkommunikation geeignet sind, so konfiguriert ist, dass es eine eingehende Datenkommunikation, vorzugsweise entsprechend dem verwendeten Kommunikationsprotokoll, priorisiert und die jeweilige Datenkommunikation entsprechend ihrer Priorität über die Matrixschaltanlage (18) überträgt.

5. Vorrichtung (10) mit mehreren Anschlüssen nach Anspruch 4, wobei
die Matrixschaltanlage (18) und/oder die Steuereinheit (20) geeignet sind, um Datentelegramme in OSI-Schicht 1 oder 2 sofort weiterzuleiten und/oder Datentelegramme in OSI-Schicht 3 in priorisierten Warteschlangen zu speichern.

6. Vorrichtung (10) mit mehreren Anschlüssen nach mindestens einem der vorhergehenden Ansprüche, wobei
mindestens eines der Funktionsmodule (28) geeignet ist, um zusätzliche Funktionen selektiv für mindestens eines der Feldgeräte (38, 48, 50, 52, 54, 56, 58) bereitzustellen, vorzugsweise wenn das Feldgerät (38, 48, 50, 52, 54, 56, 58) mit der Vorrichtung (10) mit mehreren Anschlüssen verbunden ist, wobei die zusätzlichen Funktionen durch die Vorrichtung (10) mit mehreren Anschlüssen bereitgestellt werden.

7. Vorrichtung (10) mit mehreren Anschlüssen nach Anspruch 6, wobei die zusätzlichen Funktionen mindestens eine der folgenden umfassen:
- Cybersicherheitsfunktionen, vorzugsweise eine Firewall und/oder ein Anmeldeserver,
- Webserver-Funktionen,
- VPN-Funktionen und
- Erkennung von Eindringlingen.

8. Vorrichtung (10) mit mehreren Anschlüssen nach mindestens einem der vorhergehenden Ansprüche, wobei
mindestens eines der Funktionsmodule (28) geeignet ist, um eine redundante Datenkommunikation bereitzustellen, indem es zwei oder mehr Kommunikationsanschlüsse (12) demselben Feldgerät (38, 48, 50, 52, 54, 56, 58) zuordnet und/oder dieselben Informationen an zwei oder mehr Kommunikationsanschlüsse (12) sendet.

9. Vorrichtung (10) mit mehreren Anschlüssen nach mindestens einem der vorhergehenden Ansprüche, wobei
die Matrixschaltanlage (18) und/oder die Steuereinheit (20) geeignet sind, verschiedene Kommunikationsprotokolle so zu übersetzen, dass eine Datenkommunikation zwischen Feldgeräten (38, 48, 50, 52, 54, 56, 58), die verschiedene Kommunikationsprotokolle verwenden, ermöglicht wird.

10. Vorrichtung (10) mit mehreren Anschlüssen nach mindestens einem der vorhergehenden Ansprüche, wobei
die Matrixschaltanlage (18) und/oder der Kommunikationsanschluss geeignet sind, um Echtzeit-Ethernet-Verbindungen und Standard-Ethernet-Verbindungen zu unterstützen, wobei zumindest die Echtzeit-Ethernet-Verbindungen auf unterschiedlichen Kommunikationsprotokollen basieren.

11. Vorrichtung (10) mit mehreren Anschlüssen nach mindestens einem der vorhergehenden Ansprüche, wobei
die Matrixschaltanlage (18) und/oder die Kommunikationsanschlüsse (12) geeignet sind, um die Kommunikationsanschlüsse (12) nach angeschlossenen Feldgeräten (38, 48, 50, 52, 54, 56, 58) abzusuchen und die Kommunikationsregeln auf der Grundlage der erfassten Feldgeräte (38, 48, 50, 52, 54, 56, 58) zu erzeugen.

12. Vorrichtung (10) mit mehreren Anschlüssen nach mindestens einem der vorhergehenden Ansprüche, umfassend
ein System-On-Chip (22) mit mehreren Kernen, das mindestens eine CPU und mindestens ein FPGA aufweist, wobei die CPU geeignet ist, um die Funktionalität der Steuereinheit (20) bereitzustellen, und das FPGA geeignet ist, um die Funktionalität der Matrixschaltanlage (18) bereitzustellen.

13. Verfahren zum Betreiben einer Vorrichtung (10) mit mehreren Anschlüssen, umfassend:
- Verbinden einer Vielzahl von Feldgeräten (38, 48, 50, 52, 54, 56, 58) mit Kommunikationsanschlüssen (12) der Vorrichtung (10) mit mehreren Anschlüssen;
- Erzeugen einer Vielzahl von Kommunikationsregeln, wobei eine oder mehrere der Kommunikationsregeln in ein oder mehrere Funktionsmodule (28) gruppiert werden und wobei ein oder mehrere Funktionsmodule (28) mindestens einem der Kommunikationsanschlüsse (12) zugeordnet werden,
- Überwachen einer Datentelegramm-Kommunikation von mindestens einigen der Kommunikationsanschlüsse (12), um Muster einer Datentelegramm-Kommunikation innerhalb der Matrixschaltanlage (18) und/oder der Vorrichtung (10) mit mehreren Anschlüssen unter Verwendung eines neuronalen Netzwerks zu erlernen,
- Aktualisieren von Kommunikationsregeln von mindestens einem der Funktionsmodule (28), um die von dem neuronalen Netzwerk erlernten Informationen abzubilden,
wobei die Kommunikationsregeln des mindestens einen der Funktionsmodule (28) die Datentelegramm-Kommunikation zwischen den Kommunikationsanschlüssen (12) und/oder zwischen den Feldgeräten (38, 48, 50, 52, 54, 56, 58) optimieren, indem sie Zeitfenster für erwartete und/oder zyklische Datentelegramme an einem jeweiligen Kommunikationsanschluss (12) reservieren,
- Steuern einer Matrixschaltanlage (18) auf der Grundlage von zumindest der Vielzahl von Kommunikationsregeln und/oder der Funktionsmodule (28), um eine Datenkommunikation zwischen den Feldgeräten (38, 48, 50, 52, 54, 56, 58) zu beeinflussen.

14. System, das mindestens eine Vorrichtung (10) mit mehreren Anschlüssen nach mindestens einem der Ansprüche 1 bis 12 und mindestens ein Feldgerät (38, 48, 50, 52, 54, 56, 58) umfasst, das über eine industrielle Ethernet-Verbindung (36) mit einem der Kommunikationsanschlüsse (12) der Vorrichtung (10) mit mehreren Anschlüssen verbunden ist.

## Revendications

1. Dispositif multiport (10) adapté à être connecté à une pluralité de dispositifs de terrain (38, 48, 50, 52, 54, 56, 58), en particulier en utilisant des connexions Ethernet industrielles (36), dans lequel le dispositif multiport (10) comprend :
- une pluralité de ports de communication (12) pour la connexion de dispositifs de terrain (38, 48, 50, 52, 54, 56, 58) et pour la communication de données entre le dispositif multiport (10) et les dispositifs de terrain (38, 48, 50, 52, 54, 56, 58),
- un commutateur matriciel (18) configuré pour permettre la communication de données entre lesdits ports de communication (12) et/ou entre lesdits dispositifs de terrain (38, 48, 50, 52, 54, 56, 58),
- une unité de commande (20) configurée pour générer une pluralité de règles de communication et pour commander ledit commutateur matriciel (18) sur la base d'au moins ladite pluralité de règles de communication pour affecter la communication de données entre lesdits ports de communication (12) et/ou entre lesdits dispositifs de terrain (38, 48, 50, 52, 54, 56, 58),
dans lequel l'unité de commande (20) est configurée pour regrouper une ou plusieurs des règles de communication en un ou plusieurs modules de fonction (28) et dans lequel un ou plusieurs modules de fonction (28) sont assignés à au moins un des ports de communication (12),
dans lequel l'unité de commande (20) est configurée pour utiliser un réseau neuronal qui est adapté à surveiller la communication de télégrammes de données d'au moins certains des ports de communication (12) pour apprendre le modèle de la communication de télégrammes de données dans le commutateur matriciel (18) et/ou dans le dispositif multiport (10),
dans lequel le réseau neuronal est adapté à mettre à jour les règles de communication d'au moins un des modules de fonction (28) pour refléter les informations apprises par le réseau neuronal,
dans lequel les règles de communication dudit au moins un des modules de fonction (28) sont adaptées à optimiser la communication de télégrammes de données entre les ports de communication (12) et/ou entre les dispositifs de terrain (38, 48, 50, 52, 54, 56, 58) en réservant des créneaux temporels pour des télégrammes de données attendus et/ou cycliques à un port de communication respectif (12).

2. Dispositif multiport (10) selon la revendication 1, dans lequel l'unité de commande (20) est adaptée à mettre à jour les modules de fonction (28) et/ou les règles de communication pendant le fonctionnement du dispositif multiport (10).

3. Dispositif multiport (10) selon au moins l'une des revendications précédentes, dans lequel le réseau neuronal est un réseau neuronal multicouche à propagation avant.

4. Dispositif multiport (10) selon au moins l'une des revendications précédentes, dans lequel ledit au moins un des modules de fonction (28) adapté à optimiser la communication de données est configuré pour prioriser la communication de données entrante, de préférence en fonction du protocole de communication utilisé, et à transmettre la communication de données respective en fonction de sa priorité en utilisant le commutateur matriciel (18).

5. Dispositif multiport (10) selon la revendication 4, dans lequel le commutateur matriciel (18) et/ou l'unité de commande (20) sont adaptés à acheminer des télégrammes de données dans la couche OSI 1 ou 2 immédiatement et/ou à enregistrer des télégrammes de données dans la couche OSI 3 dans des files d'attente priorisées.

6. Dispositif multiport (10) selon au moins l'une des revendications précédentes, dans lequel au moins l'un des modules de fonction (28) est adapté à fournir une fonctionnalité supplémentaire sélectivement à au moins l'un des dispositifs de terrain (38, 48, 50, 52, 54, 56, 58), de préférence lorsque le dispositif de terrain (38, 48, 50, 52, 54, 56, 58) est connecté au dispositif multiport (10), dans lequel la fonctionnalité supplémentaire est fournie par le dispositif multiport (10).

7. Dispositif multiport (10) selon la revendication 6, dans lequel la fonctionnalité supplémentaire comprend au moins l'une des suivantes :
- fonctionnalité de cybersécurité, de préférence un pare-feu et/ou un serveur de connexion,
- fonctionnalité de serveur web,
- fonctionnalité VPN et
- détection d'intrusion.

8. Dispositif multiport (10) selon au moins l'une des revendications précédentes, dans lequel au moins l'un des modules de fonction (28) est adapté à fournir une communication de données redondante en assignant deux ou plusieurs ports de communication (12) au même dispositif de terrain (38, 48, 50, 52, 54, 56, 58) et/ou en envoyant les mêmes informations à deux ou plusieurs ports de communication (12).

9. Dispositif multiport (10) selon au moins l'une des revendications précédentes, dans lequel le commutateur matriciel (18) et/ou l'unité de commande (20) sont adaptés à traduire différents protocoles de communication de telle sorte que la communication de données entre des dispositifs de terrain (38, 48, 50, 52, 54, 56, 58) utilisant différents protocoles de communication est rendue possible.

10. Dispositif multiport (10) selon au moins l'une des revendications précédentes, dans lequel le commutateur matriciel (18) et/ou le port de communication sont adaptés à prendre en charge des connexions Ethernet en temps réel et des connexions Ethernet standard, dans lequel au moins les connexions Ethernet en temps réel sont basées sur différents protocoles de communication.

11. Dispositif multiport (10) selon au moins l'une des revendications précédentes, dans lequel le commutateur matriciel (18) et/ou les ports de communication (12) sont adaptés à balayer les ports de communication (12) à la recherche de dispositifs de terrain connectés (38, 48, 50, 52, 54, 56, 58) et à générer les règles de communication sur la base des dispositifs de terrain détectés (38, 48, 50, 52, 54, 56, 58).

12. Dispositif multiport (10) selon au moins l'une des revendications précédentes, comprenant un système sur puce multicœur (22) présentant au moins une unité centrale et au moins un FPGA, dans lequel l'unité centrale est adaptée à fournir la fonctionnalité de l'unité de commande (20) et le FPGA est adapté à fournir la fonctionnalité du commutateur matriciel (18).

13. Procédé de fonctionnement d'un dispositif multiport (10), comprenant les étapes consistant à :
- connecter une pluralité de dispositifs de terrain (38, 48, 50, 52, 54, 56, 58) à des ports de communication (12) du dispositif multiport (10) ;
- générer une pluralité de règles de communication, dans lequel une ou plusieurs des règles de communication sont regroupées en un ou plusieurs modules de fonction (28) et dans lequel un ou plusieurs modules de fonction (28) sont assignés à au moins un des ports de communication (12),
- surveiller la communication de télégrammes de données d'au moins certains des ports de communication (12) pour apprendre le modèle de la communication de télégrammes de données dans le commutateur matriciel (18) et/ou le dispositif multiport (10) en utilisant un réseau neuronal,
- mettre à jour les règles de communication d'au moins un des modules de fonction (28) pour refléter les informations apprises par le réseau neuronal,
dans lequel les règles de communication dudit au moins un des modules de fonction (28) optimisent la communication de télégrammes de données entre les ports de communication (12) et/ou entre les dispositifs de terrain (38, 48, 50, 52, 54, 56, 58) en réservant des créneaux temporels pour des télégrammes de données attendus et/ou cycliques à un port de communication respectif (12),
- commander un commutateur matriciel (18) sur la base d'au moins ladite pluralité de règles de communication et/ou desdits modules de fonction (28) pour affecter la communication de données entre lesdits dispositifs de terrain (38, 48, 50, 52, 54, 56, 58).

14. Système comprenant au moins un dispositif multiport (10) selon au moins l'une des revendications 1 à 12 et au moins un dispositif de terrain (38, 48, 50, 52, 54, 56, 58) connecté à l'un des ports de communication (12) du dispositif multiport (10) en utilisant une connexion Ethernet industrielle (36).
